**Europäisches Patentamt**

**European Patent Office**

**Office européen des brevets**

(19)

(11) Veröffentlichungsnummer: **0 297 420 B1**

# (12) EUROPÄISCHE PATENTSCHRIFT

(45) Veröffentlichungstag der Patentschrift:
**13.02.91 Patentblatt 91/07**

(51) Int. Cl.⁵: **C10B 53/00, B01D 5/00**

(21) Anmeldenummer: **88109964.2**

(22) Anmeldetag: **23.06.88**

(54) **Anlage zur Pyrolyse von Abfallmaterial.**

(30) Priorität: **30.06.87 DE 3721475**

(43) Veröffentlichungstag der Anmeldung:
**04.01.89 Patentblatt 89/01**

(45) Bekanntmachung des Hinweises auf die
Patenterteilung:
**13.02.91 Patentblatt 91/07**

(84) Benannte Vertragsstaaten:
**AT BE CH DE GB IT LI NL SE**

(56) Entgegenhaltungen:
**DE-A- 2 928 676**
**DE-A- 3 545 202**
**DE-A- 3 601 786**
**FR-A- 687 763**

(73) Patentinhaber: **Asea Brown Boveri
Aktiengesellschaft
Kallstadter Strasse 1
D-6800 Mannheim-Käfertal (DE)**

(72) Erfinder: **Steinstrasser, Frank, Dr.
Hölkeskampring 169
D-4690 Herne 1 (DE)**
Erfinder: **Rossol, Gerhard
Johannisplatz 4
D-8192 Geretsried (DE)**

(74) Vertreter: **Rupprecht, Klaus, Dipl.-Ing. et al
c/o Asea Brown Boveri Aktiengesellschaft
Zentralbereich Patente Postfach 100351
D-6800 Mannheim 1 (DE)**

**Beschreibung**

Die Erfindung betrifft eine Anlage zur Pyrolyse von Kohlenwasserstoffe enthaltendem Abfallmaterial, insbesondere Kunststoff- und/oder Gummiabfälle enthaltendem Abfallmaterial, mit einem Pyrolysereaktor und mindestens einer Kühlstufe für das im Pyrolysereaktor erzeugte heiße Pyrolysegas, wobei wenigstens die dem Pyrolysereaktor unmittelbar nachgeschaltete Kühlstufe einen Kühler mit von oben nach unten verlaufendem Wärmetauschkanal für direkten Wärmetausch zwischen dem heißen Pyrolysegas und Pyrolyseöl aufweist, das durch Kondensation von Pyrolysegas erzeugt wird.

Zum Kühlen und teilweisen Kondensieren von heißem Pyrolysegas in einer Pyrolyseanlage ist es bekannt, das Pyrolysegas in einer Kühlstufe mit vertikal verlaufendem Wärmetauschkanal in direkten Kontakt mit eingesprühtem Pyrolyseöl zu bringen (DE-A-29 28 676). Hierbei wird jenes Pyrolyseöl versprüht, das in der Kühlstufe durch die direkte Kühlung gewonnen wurden. Während des Kühlvorgangs besteht die Gefahr, daß heißen Pyrolysegas mit der kälteren Wand des Wärmetauschkanals in Berührung kommt und Bestandteile des Pyrolysegases in unerwünschter Weise kondensieren, vercracken und/oder polymerisieren und sich feste oder zähflüssige Reaktionsstoffe, insbesondere Koks, Ruß oder Teere, auf der Wand ablagern. In der bekannten Kühlstufe wird diese Ablagerung sehr begünstigt durch die horizontal gegeneinander ausgerichteten Sprührichtungen der Sprühdüsen, die hierdurch große Bereiche der Innenwand für die Beaufschlagung mit dem heißen Pyrolysegas freigeben. Hinzu kommt noch der große Abstand zwischen den Sprühdüsen und der oberen Zufuhrstelle des heißen Pyrolysegases, der weitere große Wandflächen für Kondensation und-/oder Vercrackung freigibt. Schließlich muß die Wand des Wärmetauschkanals aus einem Material bestehen, das dem heißen Pyrolysegas mit einer Temperatur von 400 bis 900° Celsius widersteht. Dies steigert die Kosten der Anlage.

Der Erfindung liegt daher die Aufgabe zugrunde, die Nachteile des Standes der Technik zu überwinden und eine Anlage der eingangs genannten Art so weiterzubilden, daß bei kostengünstigem Aufbau unerwünschte Verschmutzungen und Niederschläge auf der Innenwand des Wärmetauschkanals vermieden sind. Darüber soll die Anlage leicht an verschiedene Betriebsbedingungen anpaßbar und den auftretenden Belastungen voll gewachsen sein.

Zur Lösung dieser Aufgabe wird eine Kühlstufe in zwei verschiedenen baulichen Ausführungsformen vorgeschlagen.

Die erste Ausführungsform besteht darin, daß im oberen Endbereich des Wärmetauschkanals mehrere, vorzugsweise eine Vielzahl von Sprühdüsen für das Pyrolyseöl ringförmig angeordnet sind, deren Sprührichtungen im wesentlichen zum unteren Ende des Wärmetauschkanals hin ausgerichtet sind, daß oberhalb der Sprühdüsen eine Heißgasleitung für die Zufuhr des heißen Pyrolysegases in den Wärmetauschkanal mündet, daß oberhalb der Sprühdüsen mindestens eine Zufuhrleitung für ein Schutzgas in den oberen Endbereich des Wärmetauschkanals mündet, und daß unterhalb der Sprühdüsen wenigstens ein Überströmkanal für Pyrolyseöl angeordnet ist, durch den eine Schicht Pyrolyseöl auf die Innenwand des Wärmetauschkanals gebracht werden kann.

Durch die ringförmige Anordnung der Sprühdüsen wird der gesamte Querschnitt des Wärmetauschkanals mit versprühtem, tropfenförmigen Pyrolyseöl ausgefüllt, so daß das heiße Pyrolysegas beim Abwärtsströmen im Wärmetauschkanal intensiv und rasch gekühlt wird und eine Ausscheidung von teerartigen oder festen Stoffen vermieden ist. Da der Raum oberhalb der Sprühdüsen durch ein Schutzgas insbesondere im wandnahen Bereich ausgefüllt wird, kommen die heißen Pyrolysegase mit der Wand des Wärmetauschkanals nicht in Berührung. Ausscheidungen und Niederschläge sind daher auch in diesem Bereich vermieden. Um auch den Bereich unterhalb der Sprühdüsen gegen unerwünschte Ausscheidungen und Niederschläge abzuschirmen, wird durch den Überströmkanal Pyrolyseöl, das kälter als das heiße Pyrolysegas ist, auf die Innenwand des Wärmetauschkanals aufgebracht. Dieses Pyrolyseöl läuft auf dem gesamten Umfang der Innenwand nach unten und schützt diese vor unerwünschten Niederschlägen von Teer oder anderen Stoffen. Gleichzeitig wird eine intensive Kühlung der Wand erreicht, so daß für die Wand ein Material, vorzugsweise Stahl, Verwendung finden kann, das keine besondere Temperaturbeständigkeit aufweist und daher kostengünstig ist.

Gemäß einer bevorzugten Weiterbildung der Erfindung sind die Sprühdüsen an einem torusförmigen Verteilrohr angeordnet, dessen Zentralachse in die gleiche Richtung wie die Längsachse des Wärmetauschkanals zeigt. Vorzugsweise decken sich Zentralachse und Längsachse. Da hierdurch der oben eingeführte Strahl des heißen Pyrolysegases durch den Innenraum des torusförmigen Verteilrohres geführt ist, erfolgt eine besonders gute Mischung des heißen Pyrolysegases mit dem versprühten kälteren Pyrolyseöl.

Um den Querschnitt des Wärmetauschkanals mit einer möglichst geringen Anzahl von Sprühdüsen mit Sprühnebel auszufüllen, ist es empfehlenswert, daß die Sprühkegel der Sprühdüsen einen Sprühwinkel aufweisen, der ungefähr 45 bis 60° beträgt, und daß die Sprühdüsen derart nach unten ausgerichtet sind, daß die Sprühkegel – im vertikalen Zentralschnitt gesehen – jeweils mit der wandnahen Mantellinie ungefähr parallel zur Wand des Wärmetauschkanals verlaufen.

Für das Aufbringen der Pyrolyseöl-Schicht auf die Innenwand des Wärmetauschkanals ist es zweckmäßig, daß der Überströmkanal den Wärmetauschkanal umgreift, und daß eine Vielzahl von Durchtrittsöffnungen zur Innenwand des Wärmetauschkanals vorgesehen sind.

Als Schutzgas könnte Stickstoff vorgesehen werden, empfehlenswerter und preisgünstiger ist es jedoch, daß das Schutzgas aus gekühltem Pyrolysegas besteht, das vom Öl befreit und gereinigt ist.

Die zweite Ausführungsform der Kühlstufe besteht darin, daß im oberen Endbereich des Wärmetauschkanals mindestens eine Sprühdüse für das Pyrolyseöl mit nach unten ausgerichteter Sprührichtung angeordnet ist, wobei der Sprühkegel sich über den gesamten Querschnitt des Wärmetauschkanals erstreckt, daß unterhalb der Sprühdüse in der Seitenwand des Wärmetauschkanals eine Zufuhrleitung für das heiße Pyrolysegas mit horizontaler Strömungsrichtung in den Wärmetauschkanal mündet, daß oberhalb der Sprühdüse ein Rotationszerstäuber angeordnet ist, der eine ungefähr horizontale Zerstäubungsscheibe aufweist, und der für die Zerstäubung von Pyrolyseöl vorgesehen ist, und daß der Wärmetauschkanal im Bereich unterhalb der Sprühdüse von einem Ringkanal umgeben ist, dem an seinem unteren Ende Pyrolyseöl zuführbar ist und der an seinem oberen Ende offen ist und einen Überlauf für das Pyrolyseöl bildet derart, daß das überlaufende Pyrolyseöl die gesamte innere Wand des Ringkanals mit einer Ölschicht bedeckt.

Im oberen Endbereich des Wärmetauschkanals ist bei dieser Ausführungsform eine Sprühdüse angeordnet, deren Sprühkegel den gesamten Querschnitt des Wärmetauschkanals überdeckt. Die Zuleitung des heißen Pyrolysegases erfolgt hierbei unterhalb der Sprühdüse derart, daß das austretende heiße Pyrolysegas von der Seite her in den Sprühkegel eintritt und sich dort mit dem eingesprühten Pyrolyseöl gut vermischt. Um den Wärmetauschkanal oberhalb der Sprühdüse gegen das Eindringen von heißem Pyrolysegas abzuschirmen und zu kühlen, ist dort ein Rotationsstäuber vorgesehen, auf dessen Zerstäuber Pyrolyseöl aufgebracht und in horizontaler Richtung zerstäubt wird. Der hierbei sich ausbildende Sprühbereich schirmt den oberen Bereich des Wärmetauschkanals gegen das Eindringen von heißem Pyrolysegas ab. Der unterhalb der Sprühdüse vorgesehene Ringkanal kühlt die Trennwand zum Wärmetauschkanal wirkungsvoll und der auf der Trennwand sich ausbildende Ölfilm verhindert den direkten Kontakt des Pyrolysegases mit der Trennwand, so daß sich keine teer- oder koksartigen Bestandteile auf der Trennwand absetzen können.

Besitzt die Anlage eine weitere Kühlstufe, in der leichtsiedendes Pyrolyseöl anfällt, so ist es empfehlenswert, die Sprühdüse mit dem in der weiteren Kühlstufe anfallenden leichten Pyrolyseöl zu speisen. Da das leichtsiedende Pyrolyseöl gegenüber dem heißen Pyrolysegas eine sehr geringe Temperatur besitzt, ist die Kühlung sehr wirkungsvoll.

Da das in den Ringkanal zur Kühlung eingeführte Pyrolyseöl bei den herrschenden Temperaturen nicht verdampfen darf, d.h. hochsiedend sein muß, ist der Ringkanal zur Pyrolyseölversorgung zweckmäßig unter Zwischenschaltung einer Pumpe an den Ölraum des Abscheidebehälters der Kühlstufe angeschlossen.

Eine ausreichende Kühlung wird erreicht, wenn der Rinkanal eine Höhe aufweist, die ungefähr dem 1- bis 2-fachen der Weite des Wärmetauschkanals gleich ist. Gleichzeitig empfiehlt es sich, den oberen Rand der Trennwand zwischen Wärmetauschkanal und Ringkanal mit sägezahnähnlichen Vorsprüngen zu versehen. Hierdurch wird das Übertreten des Pyrolyseöls gefördert und eine gleichmäßige Ausbildung des Ölfilmes auf der Trennwand erreicht.

Für beide Ausführungsformen des Wärmetauschkanals ist es vorteilhaft, diesen durch eine halbkugelförmige Decke zu verschließen, so daß der obere Endbereich des Wärmetauschkanals halbkugelförmig ist. Durch diese Ausbildung wird die Abschirmung des oberen Endbereichs gegenüber dem heißen Pyrolysegas erleichtert.

Da das Pyrolyseöl, das zur Benetzung der Wand des Wärmetauschkanals zugeführt wird, durch das heiße Pyrolysegas nicht verdampft werden darf, empfiehlt es sich, den Wärmetauschkanal zur Pyrolyseölversorgung an einen Abscheidebehälter für hochsiedendes Pyrolseöl der Kühlstufe anzuschließen. Hierbei wird so vorgegangen, daß der Ölraum des Abscheidebehälters, zweckmäßig unter Zwischenschaltung einer Pumpe, mit dem Überströmkanal verbunden ist.

Ist der Kühlstufe eine weitere Kühlstufe nachgeschaltet, in der leichtsiedendes Pyrolyseöl anfällt, so ist es zweckmäßig, die Sprühdüsen mit dem in der weiteren Kühlstufe anfallenden leichtsiedenden Pyrolyseöl zu versorpgen. Hierdurch sind zusätzliche Reinigungsmaßnahmen und Kühleinrichtungen für das Pyrolyseöl, wie sie für eine Anlage gemäß dem Stand der Technik erforderlich sind, überflüssig.

Weitere Vorteile und Merkmale der Erfindung gehen aus der folgenden Beschreibung von Ausführungsbeispielen im Zusammenhang mit den schematischen Zeichnungen hervor.

Hierbei zeigt :

Figur 1 den schematischen Aufbau einer Anlage gemäß der Erfindung mit zwei Kühlstufen,

Figur 2 die erste Ausführungsform der Kühlstufe (Einzelheit II der Fig. 1) im vertikalen Zentralschnitt und größerer Darstellung,

Figur 3 die zweite Ausführungsform der Kühlstufe im vertikalen Zentralschnitt und gegenüber Figur 1 größerer Darstellung sowie

Figur 4 einen Ausschnitt des Gegenstands der Fig. 3 in Ansicht aus Richtung IV und in vergrößerter Darstellung.

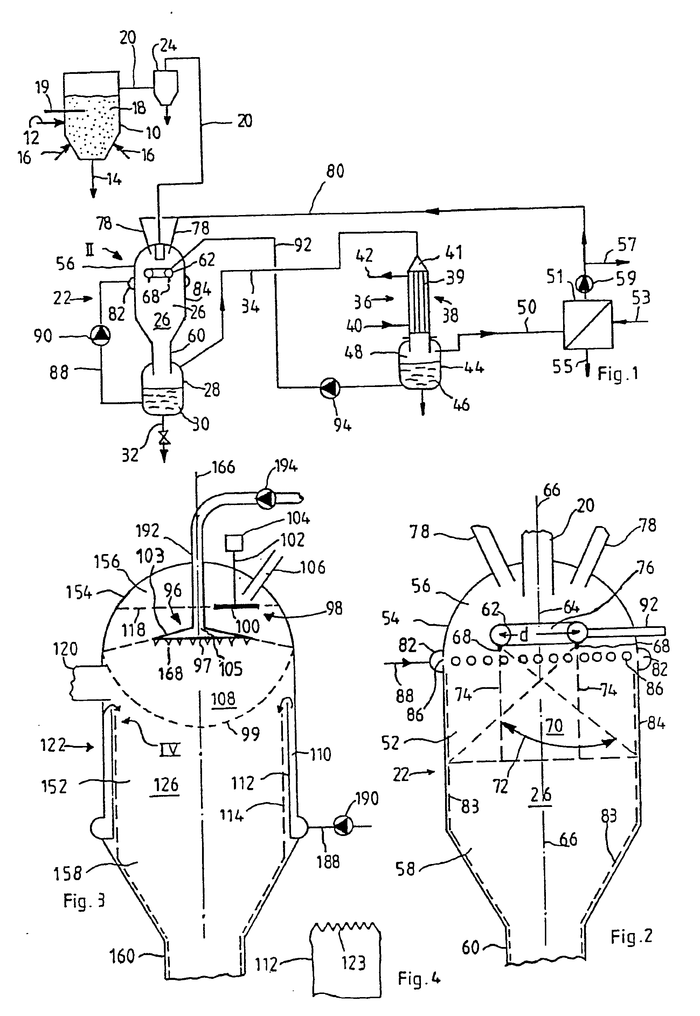

Gemäß Fig. 1 weist die Pyrolyseanlage einen stehenden Pyrolysereaktor 10 auf. Das Abfallmaterial, vorzugsweise kleinstückige Kunststoff- oder Gummiabfälle, wird durch die Leitung 12 in ein Wirbelbett 18 eingebracht, das nach der Pyrolyse verbleibende Restmaterial wird unten durch die Leitung 14 aus dem Pyrolysereaktor abgezogen. Da der Pyrolysereaktor mit einem Wirbelbett arbeitet, wird durch die Leitungen 16 ein Wirbelgas unten in den Pyrolysereaktor eingeblasen, welches das dort vorhandene Wirbelmaterial, vorzugsweise feinkörnigen Sand, verwirbelt und das Wirbelbett 18 bildet. Die für die Vergasung des Abfallmaterials erforderliche Wärme wird dem Wirbelbett durch mehrere Heizrohre 19 zugeführt, die mit Gas befeuert sind. In Fig. 1 ist nur ein einziges Heizrohr gezeigt.

Das im Pyrolysereaktor entstandene heiße Pyrolysegas wird durch die Heißgasleitung 20 dem oberen Bereich des Pyrolysereaktors 10 entnommen und der Kühlstufe 22 zugeführt. Hierbei ist in die Heißgasleitung 20 ein Zyklonabscheider 24 eingeschaltet, in dem feste Teile, die vom Pyrolysegas mitgeführt werden, abgeschieden werden.

In der Kühlstufe 22 wird das heiße Pyrolysegas, das eine Temperatur von 400 bis 1000°C, vorzugsweise 500 bis 700°C aufweist, in direktem Wärmetausch mit Pyrolyseöl auf eine Temperatur von ungefähr 120 bis 180°C, vorzugsweise 140 bis 160°C, abgekühlt. Hierbei kondensiert ein Teil des Pyrolysegases im Wärmetauschkanal 26 und es entsteht ein hochsiedendes Pyrolyseöl, dessen Siedepunkt bei Atmosphärendruck in dem oben angegebenen Temperaturbereich oder höher liegt, vorzugsweise bis 250° C. Dieses hochsiedende Pyrolyseöl fließt zusammen mit dem abgekühlten Pyrolysegas im vertikalen Wärmetauschkanal 26 nach unten zum Abscheidebehälter 28. Hier trennt sich das Pyrolysegas vom hochsiedenden Pyrolyseöl, das sich unten im stehenden, zylindrischen Abscheidebehälter 28 im Ölraum 30 sammelt. Das hochsiedende Pyrolyseöl wird durch die Leitung 32 aus dem Ölraum 30 entnommen und weiterverarbeitet. Einzelheiten des Aufbaus und der Wirkungsweise der Kühlstufe 22 bzw. des Wärmetauschkanals 26 werden im Zusammenhang mit Figur 2 näher erläutert.

Das sich oberhalb des Ölraums 30 im Abscheidebehälter 28 sammelnde, gekühlte Pyrolysegas wird durch die Verbindungsleitung 34 abgezogen und einer weiteren Kühlstufe 36 oben zugeführt. Diese weitere Kühlstufe weist einen stehenden Röhrenwärmetauscher 38 auf, der mit indirektem Wärmetausch arbeitet, es handelt sich demnach um einen Oberflächenwärmetauscher. Das in die Wärmetauschrohre 39 des Röhrenwärmetauschers 38 mit einer Temperatur von 120 bis 180° Celsius, vorzugsweise 140 bis 160°C eintretende Pyrolysegas wird unter Abwärtsströmung auf eine Temperatur von ungefähr 30 bis 80°, vorzugsweise 40 bis 60° abgekühlt. Hierbei kondensiert ein Teil des Pyrolysegases und es entsteht ein leichtsiedendes Pyrolyseöl, dessen Siedepunkt bei Atmosphärendruck in dem vorgenannten Temperaturbereich oder höher – bis 120°C – liegt. Als Kühlmittel dient Kühlwasser, das durch die Leitung 40 dem Röhrenwärmetauscher 38 zugeführt und durch die Leitung 42 abgeführt wird.

Der Röhrenwärmetauscher 38 weist vertikal verlaufende Wärmetauschrohre 39 auf, die oben in einen Sammler 41 münden. An diesen Sammler 41 ist die Verbindungsleitung 34 angeschlossen. Die Kühlrohre 39 sind in einem stehenden, zylindrischen geschlossenen Behälter 43 angeordnet, dem das Kühlwasser unten zugeführt und oben abgeführt wird, so daß der Wärmetausch mit dem Pyrolysegas im Gegenstrom erfolgt. Die Wärmetauschrohre 39 münden unten in den zweiten Abscheidebehälter 44.

Das Gemisch aus leichtsiedendem Pyrolyseöl und abgekühltem Pyrolysegas strömt in den Wärmetauschrohren 39 nach unten in den stehenden, zweiten Abscheidebehälter 44. Hier trennt sich das leichtsiedende Pyrolyseöl vom Pyrolysegas und sammelt sich unten im Leichtölraum 46, wogegen das abgekühlte Pyrolysegas sich darüber im Raum 48 sammelt. Aus diesem Raum 48 wird das Pyrolysegas durch die Leitung 50 entnommen und einem schematisch angedeuteten Wärmetauscher 51 zugeführt, in dem es durch indirekten Wärmetausch auf Umgebungstemperatur oder darunter abgekühlt wird. Als Kühlmittel dient Kühlwasser, das durch die Leitungen 53, 55 zugeführt bzw. abgeführt wird. Durch die Leitung 57 kann überschüssiges kaltes Pyrolysegas dem Wärmetauscher 51 entnommen und weiterverwendet werden, z.B. als Heizgas. Erforderlichenfalls wird das aus dem Wärmetauscher 51 austretende Pyrolysegas noch durch einen Gaswäscher geführt. Das ist in Fig. 1 nicht gezeigt.

Der Wärmetauschkanal 26 der Kühlstufe 22 ist in einer ersten Ausführungsform in Figur 2 als Einzelheit und in größerem Maßstabe dargestellt. Danach besitzt der vertikal verlaufende Wärmetauschkanal 26 einen kreiszylindrischen Bereich 52, der oben durch eine halbkugelförmige Decke 54 abgeschlossen ist, so daß der obere Endbereich 56 des Wärmetauschkanals halbkugelförmig ist. Nach unten schließt sich an der kreiszylindrischen Bereich 52 ein sich nach unten verengender, kreiskegelförmiger Bereich 58 an. An diesen Bereich 58 ist der vertikal verlaufende zylindrische Kanal 60 zentrisch angeschlossen und führt in den Abscheidebehälter 28 (vgl. Figur 1). Die gesamte Höhe des Wärmetauschkanals 26 beträgt das 1,5 bis 6-fache seines Durchmessers. Der Durchmesser des Kanals 60 ist das 0,2 bis 0,5-fache des Durchmessers des Bereiches 52.

In jener Gegend, in der der kreiszylindrische Bereich 52 in den halbkugelförmigen Endbereich 56 übergeht, ist im Wärmetauschkanal 26 ein torusförmiges Verteilrohr 62 angeordnet, wobei sich die vertikale Zentralachse 64 des Verteilrohres mit der zentralen Vertikalachse 66 des Wärmetauschkanals 26 deckt. An dem Verteilrohr 62 ist eine Vielzahl von Sprühdüsen 68 gleichmäßig verteilt und ringförmig vorgesehen, deren Hauptsprührichtung zum unteren Ende des Wärmetauschkanals hinzeigt. Die einzelnen Sprühdüsen 68 weisen zweckmäßig eine Sprühwinkel 72 auf, der ungefähr 45 bis 65° beträgt. Die Sprühdüsen 68 sind hierbei derart zur Vertikalachse 66 hin ausgerichtet, daß die wandnahen Mantellinien 74 der Sprühkegel im Bereich 52 ungefähr parallel und mit abstand zur Wand 84 des Wärmetauschkanals 26 verlaufen. Dies ist deutlich aus Figur 2 zur ersehen. Wie weiter aus Figur 2 zu erkennen ist, überlappen sich die Sprühwinkel der einzelnen Sprühdüsen zu einem gemeinsamen Sprühkegel 70, der den gesamten Querschnitt des Wärmetauschkanals 26 überdeckt. Der mittlere Durchmesser d des horizontal angeordneten torusförmigen Verteilrohres 62 beträgt ungefähr das 0,35 bis 0,75-fache, vorzugsweise das 0,45 bis 0,6-fache des lichten Durchmessers des Wärmetauschkanals 26 im Bereich 52. Der Querschnitt des Verteilrohres 32 ist gering im Verhältnis zum Querschnitt des Bereiches 52.

Durch die Decke 54 ist die Heißgasleitung 20 vertikal in den halbkugelförmigen Endbereich 56 eingeführt und auf den freien Raum 76 ausgerichtet, der vom Verteilrohr 62 umschlossen ist (vgl. auch Figur 1). Die rohrförmige Heißgasleitung 20 ist hierbei koaxial zur Zentralachse 64 und Vertikalachse 66 angeordnet und ragt das 1 bis 2-fache ihres Durchmessers in den Endbereich 56. Der vertikale Abstand zwischen der Mündung der Heißgasleitung 20 und dem Verteilrohr 62 beträgt ungefähr das 1 bis 3-fache der lichten Weite der Heißgasleitung 20.

In den halbkugelförmigen oberen Endbereich 56 des Wärmetauschkanals münden mehrere, vorzugsweise zwei gleichmäßig um die Heißgasleitung 20 verteilt angeordnet Zufuhrleitungen 78. Die Zufuhrleitungen ragen ungefähr das 1 bis 2-fache ihres lichten Durchmessers in den oberen Endbereich 56 und sie sind hierbei zur Vertikalachse 66 geneigt und auf den freien Raum 76 ausgerichtet, der vom Verteilrohr 62 umgeben ist. Wie aus Figur 1 hervorgeht, sind die Zufuhrleitungen 78 an eine Gasleitung 80 angeschlossen, die zu dem Wärmetauscher 51 führt. Dort ist die Gasleitung 80 an den ausgang des Wärmetauschers 51 angeschlossen, der kaltes Pyrolysegas abgibt. Dieses kalte Pyrolysegas enthält keine kondensierbaren Bestandteile und ist daher besonders gut als Schutzgas geeignet.

In der Gegend, in der der kreiszylindrische Bereich 52 in den halbkugelförmigen Endbereich 56 übergeht, umschließt ein ringförmiger Überströmkanal 82 den Wärmetauschkanal 26. Der Überströmkanal 82 ist unterhalb des Verteilrohres 62 angeordnet.

Der Überströmkanal 82 hat zweckmäßig eine ungefähr halbkreisförmigen Querschnitt und ist von der Wand 84 des Wärmetauschkanals bereichsweise begrenzt. Der Überströmkanal ist demnach von einem Rohr mit halbkreisförmigen Querschnitt und der Wand 84 begrenzt. Vom Überströmkanal 82 führt eine Vielzahl von vorzugsweise kreisförmigen Öffnungen 86 durch die Wand 84 in den Wärmetauschkanal 26. Die Öffnungen sind hierbei in einer Horizontalebene angeordnet, so daß Pyrolyseöl, das in den Überströmkanal 82 gepumpt wird, gleichmäßig durch die Öffnungen 86 in den Wärmetauschkanal 26 übertritt und an der Innenfläche der Wand 84 nach unten zum Abscheidebehälter 28 fließt. Da eine Vielzahl von Öffnungen 86 vorgesehen ist, bildet sich eine Schicht 83 von Pyrolyseöl auf der gesamten Innenfläche der Wand 84 sowie auf der Wand des Kanals 60. Zur Versorgung des Überströmkanals 82 mit dem Pyrolyseöl ist eine Rohrleitung 88 vorgesehen, die zum Ölraum 30 des Abscheidebehälters 28 führt. In die Rohrleitung 88 ist eine Pumpe 90 eingefügt (vgl. Figur 1). Der Überströmkanal 82 hat eine lichte Weite, die ungefähr gleich ist 1/20 bis 1/40 der lichten Weite des Bereiches 52. Die Austrittsgeschwindigkeit des Pyrolyseöls aus den Öffnungen 86 muß so gering sein, daß sich kein Ölstrahl bildet, sondern daß das Pyrolyseöl nur auf der Innenfläche der Wand 84 – also im Wärmetauschkanal – nach unten fließt.

Das Verteilrohr 62 ist durch eine Leitung 92 mit eingefügter Pumpe 94 an den Leichtölraum 46 des zweiten Abscheidebehälters 44 angeschlossen (vgl. Figur 1).

Während des Betriebs der Anlage wird im Pyrolysereaktor 10 das durch die Leitung 12 zugeführte Abfallmaterial durch die Heizrohre 19 auf 400 bis 1000°C erhitzt und unter Luftabschluß entgast. Das heiße Pyrolysegas wird dem Zyklonabscheider 24 zugeführt, wo Staubteile und Flugasche vom Pyrolysegas getrennt werden. Das Pyrolysegas strömt dann durch die Heißgasleitung 20 zur Kühlstufe 22 und tritt in den oberen Endbereich 56 des Wärmetauschkanals ein.

Gleichzeitig ist die Pumpe 94 in Betrieb, so daß bereits im Leichtölraum 46 vorhandenes leichtsiedendes Pyrolyseöl vom Leichtölraum 46 in das Verteilrohr 62 gefördert wird und aus den Sprühdüsen 68 unter Bildung des Sprühkegels 70 feinzerstäubt austritt. Das aus der Heißgasleitung 20 austretende heiße Pyrolysegas strömt im Wärmetauschkanal 26 zunächst durch den freien Raum 76 und dann durch den Sprühkegel 70 nach unten.

Da das leichtsiedende Pyrolyseöl eine Temperatur von ungefähr 30 bis 60°C aufweist, wird ein Teil dieses leichtsiedenden Pyrolyseöls unter Abkühlung des heißen Pyrolysegases verdampft, es findet somit eine direkte Kühlung des heißen Pyrolysegases auf ungefähr 120 bis 180° Celsius statt. Bei der Kühlung kondensiert ein Teil des heißen Pyrolysegases zu hochsiedendem Pyrolyseöl und das Gemisch aus abgekühlten Pyrolysegas und hochsiedendem Pyrolyseöl strömt nach unten und trennt sich im Abscheidebehälter 28. Das hochsiedende Pyrolyseöl sammelt sich im Ölraum 30, das abgekühlte Pyrolysegas befindet sich darüber und wird durch die Verbindungsleitung 34 zur weiteren Kühlstufe 36 geleitet. Hier strömt das Pyrolysegas im Röhrenwärmetauscher 38 nach unten und wird durch Kühlwasser, das durch die Leitungen 40 und 42 zu-bzw. abgeführt wird, weiter abgekühlt, so daß ein Pyrolysegas mit einer Temperatur von 30 bis 60°C entsteht und sich im Raum 48 des zweiten Abscheidebehälters 44 sammelt. Das während der Abkühlung entstehende leichtsiedende Pyrolyseöl strömt ebenfalls nach unten und sammelt sich im Leichtölraum 46. Von hier wird, wie bereits dargelegt, das leichtsiedende Pyrolyseöl mit einer Temperatur von 30 bis 60°C dem Verteilrohr 62 und somit den Sprühdüsen 68 zugeführt. Aus dem Raum 48 strömt das Pyrolysegas zum Wärmetauscher 51, wo es weiter gekühlt wird und ggf. noch vorhandene kondensierbare Bestandteile ausfallen. Das kalte Pyrolysegas strömt dann zu der Leitung 57 und zur Gasleitung 80. Zur Förderung des Pyrolysegases ist nach dem Wärmetauscher 51 ein Kompressor 59 in die Gasleitung 80 eingefügt.

Das kalte Pyrolysegas aus dem Wärmetauscher 51 strömt durch die Gasleitung 80 den Zufuhrleitungen 78 zu, von denen es in den oberen Endbereich 56 des Wärmetauschkanals 26 eintritt. Dieses kalte Pyrolysegas füllt den halbkugelförmigen, oberen Endbereich 56 an, kühlt die Decke 54 und verhindert, daß heißes Pyrolysegas mit der kälteren Decke 54 in Berührung kommt. Hierdurch sind Ausfällungen von Teerbestandteilen, Ruß oder Koks und deren Niederschlag auf der Decke 54 vermieden.

Damit auch die Wand 84 des restlichen Wärmetauschkanals 26 innen vor Niederschlägen von Teerbestandteilen, Ruß, Koks oder dergleichen geschützt ist, wird hochsiedendes Pyrolyseöl aus dem Ölraum 30 durch die Rohrleitung 88 dem Überströmkanal 82 zugeführt (vgl. Figur 1). Von hier tritt es in den Wärmetauschkanal 26 über, läuft innen auf der wand 84 des Wärmetauschkanals 26 nach unten und bildet eine lückenlose Schicht 83. Hierdurch sind Teerabscheidungen auf der Wand vermieden und es wird gleichzeitig eine Kühlung dieser Wand 84 erreicht. An die Temperaturfestigkeit der Wand 84 sind daher keine hohen Anforderungen gestellt, es kann daher ein preisgünstiger Stahl verwendet werden.

In Fig. 3 ist die zweite Ausführungsform der Kühlstufe als Einzelheit dargestellt. Einzelteile der Ausführungsform gemäß Figur 2, die in Figur 3 wiederkehren, sind mit Bezugszeichen versehen, die gegenüber denen der Figur 2 um den Betrag 100 vergrößert sind.

Gemäß Figur 3 weist der vertikal verlaufende Wärmetauschkanal 126 einen kreiszylindrischen Bereich 152 auf, an den sich unten ein sich verengender kreiskegelförmiger Bereich 158 anschließt, der mit dem abscheidebehälter 28 durch den Kanal 160 auf die gleiche Weise wie in Figur 1 oder 2 verbunden ist. Der Bereich 152 ist mit einer halbkugelförmigen Decke 154 verschlossen, so daß der obere Endbereich 156 des Wärmetauschkanals ebenfalls halbkugelförmig ist.

In jener Gegend, in der der kreiszylindrische Bereich 152 in den oberen Endbereich 156 übergeht, ist im Wärmetauschkanal ein flacher Verteilkopf 96 vorgesehen und in einer Horizontalebene angeordnet. Der Verteilkopf 96 weist ungefähr die Form eines flachen, kreisförmigen Hohlkörpers auf, dessen Durchmesser ungefähr das 0,3 bis 0,7-fache, vorzugsweise das 0,4 bis 0,6-fache des lichten Durchmessers des Bereiches 152 beträgt. An der kreisförmigen Unterseite 97 des Verteilkopfes 96 ist eine Vielzahl von Sprühdüsen 168 gleichmäßig verteilt und mit einer Sprührichtung nach unten angeordnet. Die Anordnung ist hierbei so getroffen, daß während des Betriebs ein dichter Sprühnebel entsteht, der den gesamten Querschnitt des Wärmetauschkanals 126 bereichsweise ausfüllt. Dies ist durch eine gestrichelte Linie 99 angedeutet.

Der koaxial mit der Vertikalachse 166 des Wärmetauschkanals angeordnete Verteilkopf 96 ist durch eine vertikal und vorzugsweise zentrisch verlaufende Leitung 192 mit dem Leichtölraum 46 der weiteren Kühlstufe 36 unter Zwischenschaltung einer Pumpe 194 verbunden (vgl. Figur 1). Da die Oberseite 103 des Verteilkopfes 96 kegelförmig ausgebildet ist, ist die Leitung 192 im Bereich der Kegelspitze 105 angeschlossen.

Im oberen Endbereich 156 ist zwischen dem Verteilkopf 96 und der Decke 154 ein Rotationszerstäuber 98 angeordnet. Dieser weist eine kreisrunde horizontal verlaufende flache Zerstäuberscheibe 100 auf, die mit Hilfe einer vertikal verlaufenden Welle von einem Motor 104, der im Außenraum angeordnet ist, in eine schnelle Umdrehung von ca. 8000 bis 12000 U/min. gebracht wird. Auf die Zerstäuberscheibe 100 mündet oben eine Rohrleitung 106, die unter Zwischenschaltung einer nicht dargestellten Pumpe an den Leichtölraum 46 der weiteren Kühlstufe 44 angeschlossen ist (vgl. Figur 1). Die Rohrleitung 106 berührt nicht die Zerstäuberscheibe 100.

In den von den Sprühdüsen 168 gemeinsam gebildeten Sprühkegel 108, der von der gestrichelten Linie 99 begrenzt ist, mündet seitlich die Heißgasleitung 120, die zum Zyklonabscheider 24 führt. Die Mündung der Heißgasleitung 120 ist in horizontaler Richtung so geführt, daß das austretende heiße Pyrolysegas in den Sprühkegel 108 horizontal eintreten muß. Die Heißgasleitung 120 ist zweckmäßig in jener Gegend in den Wärmetauschkanal 126 eingeführt, in der der kreiszylindrische Bereich 152 in den oberen Endbereich 156 übergeht.

Der Wärmetauschkanal 126 ist in seinem kreiszylindrischen Bereich 152 von einem unter geschlossenen Ringkanal 110 umgeben, der sich nach oben ungefähr bis zur Heißgasleitung 120 und nach unten ungefähr bis zum Bereich 158 erstreckt. Die Kanalbreite des Ringkanals 110 beträgt ungefähr 2 bis 8 cm, vorzugsweise 3 bis 5 cm. Das obere Ende des Ringkanals ist offen, so daß zugeführtes Pyrolyseöl vom Ringkanal 110 in den Wärmetauschkanal 126 übertreten kann und innen auf der Trennwand 112 eine nach unten fließende, zusammenhängende Schicht 114 bildet. Der untere Bereich des Ringkanals 110 ist durch eine Leitung 188 mit eingefügter Pumpe 190 an den Ölraum 30 der Kühlstufe 28 angeschlossen. Gemäß einer alternativen Ausführungsform ist die Leitung 188 an den Leichtölraum 46 der weiteren Kühlstufe 44 angeschlossen. Dies ist in der Zeichnung nicht dargestellt.

Während des Betriebs wird leichtsiedendes Pyrolyseöl aus dem Leichtölraum 46 mit Hilfe der Pumpe 194 und der Rohrleitung 192 dem Verteilkopf 96 zugeführt, so daß es zu den Düsen 168 strömt. Die Düsen zerstäuben das zugeführte leichtsiedende Pyrolyseöl und bilden den Sprühkegel 108, der den Querschnitt des Wärmetauschkanals 126 mit feinen, nebelförmigen Tropfen ausfüllt. Der Pyrolylsereaktor 10 wird wie weiter oben beschrieben betrieben, und das heiße Pyrolysegas wird durch die Heißgasleitung 120 seitlich in den Sprühkegel 108 eingeführt, so daß eine innige Mischung von leichtsiedendem Pyrolyseöl und heißem Pyrolysegas erfolgt. Das heiße Pyrolysegas wird hierbei unter mindestens teilweiser Verdampfung des leichtsiedenden Pyrolyseöls abgekühlt. Es entsteht hochsiedendes Pyrolyseöl, das zusammen mit dem abgekühhlten Pyrolysegas nach unten zum Abscheidebehälter 28 strömt. Hierbei werden die flüssigen von den gasförmigen Bestandteilen, wie weiter oben beschrieben, getrennt.

Gleichzeitig wird die Zerstäuberscheibe 100 des Rotationszerstäubers 98 durch den Motor 104 in Rotation versetzt und leichtsiedendes Pyrolyseöl durch die Rohrleitung 106 oben auf die Zerstäuberscheibe 100 gebracht. Durch die Rotation wird das leichtsiedende Pyrolyseöl durch Fliehkraft fein zerstäubt und bildet im oberen Bereich 156 oberhalb des Verteilkopfs 96 einen horizontal ausgerichteten, dünnen Ölschleier 118, der in Figur 3 durch eine horizontale, gestrichelte Linie dargestellt ist. Durch den Ölschleier 118 wird vermieden, daß heißes Pyrolysegas in den oberen Endbereich 156 eindringt, sich dort abkühlt und Teerniederschläge oder andere Abscheidungen auf der Decke 154 bildet.

Gleichzeitig wird hochsiedendes Pyrolyseöl aus dem Ölraum 30 der Kühlstufe 22 mit Hilfe der Pumpe 190 durch die Rohrleitung 188 unten in den Ringkanal 110 gefördert, so daß es nach oben steigt und überläuft und auf der an den Wärmetauschkanal 126 grenzenden Innenseite der Trennwand 110 eine zusammenhängende Schicht 114 bildet, die die gesamte Innenwand benetzt. Das Öl dieser Schicht 114 läuft dann auf die Wand des Wärmetauschkanals 126 und von hier über die Wand des Kanals 60 nach unten und sammelt sich im Ölraum 30. Das Gleiche gilt auch für den Wärmetauschkanal gemäß Figur 2.

Um den Überlauf des Öles vom Ringkanal 110 zur Innenwand gleichmäßig zu gestalten, ist zweckmäßig der obere Rand der Trennwand 112 des Ringkanals 110 mit vertikalen, sägezahnähnlichen Vorsprüngen 123 versehen, wie dies in Figur 4 im Ausschnitt und als Einzelheit dargestellt ist.

Alternativ wird der Ringkanal 110 mit leichtsiedendem Pyrolyseöl aus dem Leichtölraum 46 versorgt. Hierzu ist dann die Rohrleitung 188 an den Leichtölraum 46 anzuschließen.

Auch bei der zweiten Ausführungsform der Erfindung wird auf einfache Weise eine direkte Kühlung des heißen Pyrolysegases in der Kühlstufe 122 erreicht und gleichzeitig eine Abscheidung von Teerbestandteilen, Ruß oder Koks, des heißen Pyrolysegases auf den Innenwänden des Wärmetauschkanals 126 vermieden. Darüber hinaus wird eine gute Kühlung der Wände des Wärmetauschkanals erreicht, so daß diese Wände aus kostengünstigem Stahl hergestellt sind, der nur geringe Temperaturfestigkeit besitzen muß.

**Ansprüche**

1. Anlage zur Pyrolyse von Kohlenwasserstoffe enthaltendem Abfallmaterial, insbesondere Kunststoff- und/oder Gummiabfälle enthaltendem Abfallmaterial, mit einem Pyrolysereaktor (10) und mindestens einer Kühlstufe (22, 36) für das im Pyrolysereaktor erzeugte heiße Pyrolysegas, wobei wenigstens die dem Pyrolysereaktor (10) unmittelbar nachgeschaltete Kühlstufe (22) einen Kühler mit von oben nach unten verlaufendem Wärmetauschkanal (26) für direkten Wärmetausch zwischen dem Pyrolysegas und Pyrolyseöl aufweist, das durch Kondensation von Pyrolysegas erzeugt wird, dadurch gekennzeichnet, daß im oberen Endbereich (56) des Wärmetauschkanals (26) mehrere Sprühdüsen (68) für das Pyrolyseöl ringförmig angeordnet sind, deren Sprührichtung im wesentlichen zum unteren Ende des Wärmetauschkanals (26) hin ausgerichtet ist, daß oberhalb der Sprühdüsen (68) eine Heißgasleitung (20) für die Zufuhr des heißen Pyrolysegases in den Wärmetauschkanal (26) mündet, daß oberhalb der Sprühdüsen (68) mindestens eine Zufuhrleitung (78) für ein Schutzgas in den oberen Endbereich (56) mündet, daß unterhalb der Sprühdüsen (68) wenigstens ein Überströmkanal (82) für Pyrolyseöl angeordnet ist, durch den eine Schicht (83) von Pyrolyseöl innen auf die Wand (84) des Wärmetauschkanals (26) aufgebracht werden kann (Fig. 1 und 2).

2. Anlage zur Pyrolyse von ·Kohlenwasserstoffe enthaltendem Abfallmaterial, insbesondere Kunststoffe und/oder Gummiabfälle enthaltendem Abfallmaterial, mit einem Pyrolysereaktor (10) und mindestens einer Kühlstufe (122, 36) für das im Pyrolysereaktor erzeugte heiße Pyrolysegas, wobei wenigstens die dem Pyrolysereaktor (10) unmittelbar nachgeschaltete Kühlstufe (122) einen von oben nach unten verlaufenden Wärmetauschkanal (126) für direkten Wärmetausch zwischen dem heißen Pyrolysegas und Pyrolyseöl aufweist, das durch Kondensation von Pyrolysegas erzeugt wird, dadurch gekennzeichnet, daß im oberen Endbereich (156) des Wärmetauschkanals (126) mindestens eine Sprühdüse (168) für das Pyrolyseöl mit nach unten ausgerichteter Sprührichtung angeordnet ist, wobei der Sprühkegel (108) sich über den gesamten Querschnitt des Wärmetauschkanals (126) erstreckt, daß unterbalb der Sprühdüse (168) in der Seitenwand des Wärmetauschkanals (126) eine Heißgasleitung (120) für das heiße Pyrolysegas mit einer Strömungsrichtung quer zur Vertikalachse (166) des Wärmetauschkanals in den Wärmetauschkanal (126) mündet, daß oberhalb der Sprühdüse (168) ein Rotationszerstäuber (98) angeordnet ist, der eine quer zur Vertikalachse (166) angeordnete Zerstäuberscheibe (100) aufweist und der für die Zerstäubung von Pyrolyseöl vorgesehen ist, daß der Wärmetauschkanal (126) unterhalb der Sprühdüse (168) im Bereich (152) von einem Ringkanal (110) umgeben ist, dem Pyrolyseöl an seinem unteren Ende zuführbar ist, und der an seinem oberen Ende offen ist und einen Überlauf für das Pyrolyseöl bildet derart, daß das überlaufende Pyrolyseöl die gesamte Trennwand (112) zwischen dem Ringkanal (110) und dem Wärmetauschkanal (126) auf der Innenseite mit einer Schicht (114) von Pyrolyseöl bedeckt (Fig. 3).

3. Anlage nach Anspruch 1 oder 2, dadurch gekennzeichnet, daß der Wärmetauschkanal (26 bzw. 126) unten an einen Abscheidebehälter (28) für hochsiedendes Pyrolyseöl angeschlossen ist, dessen Ölraum (30) mit dem Überströmkanal (82) bzw. Ringkanal (110), unter Zwischenschaltung einer Pumpe (90 bzw. 190) verbunden ist.

4. Anlage nach mindestens einem der Ansprüche 1 bis 3 mit einer der Kühlstufe (22 bzw. 122) nachgeschalteten weiteren Kühlstufe (36), in der leichtsiedendes Pyrolyseöl anfällt, dadurch gekennzeichnet, daß die Sprühdüsen (68 bzw. 168) mit dem in der weiteren Kühlstufe (36) anfallenden leichtsiedenden Pyrolyseöl versorgbar sind.

5. Anlage nach mindestens einem der Ansprüche 1 bis 4, dadurch gekennzeichnet, daß der Wärmetauschkanal (26 bzw. 126) durch eine halbkugelförmige Decke (54 bzw. 154) verschlossen ist und der obere Endbereich (56 bzw. 156) halbkugelförmig ist.

6. Anlage nach mindestens einem der Ansprüche 1, 3, 4 oder 5, dadurch gekennzeichnet, daß die Sprühdüsen (68) an einem torusförmigen Verteilrohr (62) angeordnet sind, dessen Zentralachse (64) in die gleiche Richtung wie die Vertikalachse (66) des Wärmetauschkanals (26) zeigt.

7. Anlage nach mindestens einem der Ansprüche 1 oder 3 bis 6, dadurch gekennzeichnet, daß der Überströmkanal (82) im Anschlußbereich der Decke (54) angeordnet ist (Figur 2).

8. Anlage nach mindestens einem der Ansprüche 1 oder 3 bis 7, dadurch gekennzeichnet, daß die Sprühdüsen (68) einen Sprühwinkel (72) aufweisen, der ungefähr 45 bis 60° beträgt, und daß die Sprühdüsen (68) derart nach unten ausgerichtet sind, daß ihre Sprühkegel im vertikalen Zentralschnitt gesehen, jeweils mit der wandnahen Mantellinie (74) ungefähr parallel und mit Abstand zur vertikalen Wand des Wärmetauschkanals (26) verlaufen (Figur 2).

9. Anlage nach mindestens einem der Ansprüche 1 oder 3 bis 8, dadurch gekennzeichnet, daß der Überströmkanal (82) die Wand (84) des Wärmetauschkanals (26) umgreift, und daß eine Vielzahl von Durchtrittsöffnungen (86) zur Innenfläche der Wand des Wärmetauschkanals (26) vorgesehen sind.

10. Anlage nach mindestens einem der Ansprüche 1 oder 3 bis 9, dadurch gekennzeichnet, daß das Schutzgas im wesentlichen aus Pyrolysegas besteht, das vom Öl befreit und gereinigt ist.

11. Anlage nach mindestens einem der Ansprüche 2 bis 5, dadurch gekennzeichnet, daß das untere Ende des Ringkanals (110) zweckmäßig unter Zwischenschaltung einer Pumpe (190) an den Ölraum (30) des Abscheidebehälters (28) der Kühlstufe (122) angeschlossen ist.

12. Anlage nach mindestens einem der Ansprüche 2 bis 5 oder 11, dadurch gekennzeichnet, daß der Ringkanal (110) eine Höhe aufweist, die ungefähr dem 1 bis 2-fachen der lichten Weite des Wärmetauschkanals (126) gleich ist.

13. Anlage nach mindestens einem der Ansprüche 2 bis 5 oder 11 bis 12, dadurch gekennzeichnet, daß die Trennwand (112) zwischen dem Wärmetauschkanal (126) und dem Ringkanal (110) am oberen Ende sägezahnähnliche, vertikale Vorsprünge (123) aufweist (Figur 4).

**Claims**

1. Plant for the pyrolysis of waste material containing hydrocarbons, especially waste material containing plastic and/or rubber wastes, having a pyrolysis reactor (10) and at least one cooling stage (22, 36) for the hot pyrolysis gas produced in the pyrolysis reactor, at least the cooling stage (22), immediately downstream of the pyrolysis reactor (10), having a cooler with a downward-extending heat exchange channel (26) for direct heat exchange between the pyrolysis gas and pyrolysis oil which is produced by condensation of pyrolysis gas, characterized in that, in the upper end region (56) of the heat exchange channel (26), a plurality of pyrolysis oil spray nozzles (68) are arranged in the form of a ring, the spray direction of the nozzles being aligned substantialy towards the lower end of the heat exchange channel (26), that a hot gas line (20) for feeding hot pyrolysis gas leads into the heat exchange channel (26) above the spray nozzles (68), that at least one feed line (78) for a blanketing gas leads into the upper end region (56) above the spray nozzles (68), and that at least one overflow channel (82) for pyrolysis oil is provided below the spray nozzles (68), through which overflow channel a layer (83) of pyrolysis oil can be applied to the inside of the wall (84) of the heat exchange channel (26) (Figures 1 and 2).

2. Plant for the pyrolysis of waste material containing hydrocarbons, especially waste material containing plastic and/or rubber wastes, having a pyrolysis reactor (10) and at least one cooling stage (122, 36) for the hot pyrolysis gas produced in the pyrolysis reactor, at least the cooling stage (122) immediately downstream of the pyrolysis reactor (10) having a downward-extending heat exchange channel (126) for direct heat exchange between the hot pyrolysis gas and pyrolysis oil which is produced by condensation of pyrolysis gas, characterized in that at least one pyrolysis oil spray nozzle (168) with a downward-aligned spray direction is arranged in the upper end region (156) of the heat exchange channel (126), the spray cone (108) extending over the entire cross-section of the heat exchange channel (126), that a hot gas line (120) for the hot pyrolysis gas in the side wall of the heat exchange channel (126) leads with a flow direction perpendicular to the vertical axis (166) of the heat exchange channel, into the heat exchange channel (126) below the spray nozzle (168), that, above the spray nozzle (168), a rotary atomizer (98) is provided which has an atomizer disc (100) arranged perpendicular to the vertical axis (166) and is intended to atomize the pyrolysis oil, and that the heat exchange channel (126) is surrounded below the spray nozzle (168) by an annular channel (110) to which pyrolysis oil can be fed at its lower end and which is open at its upper end and forms an overflow for the pyrolysis oil, in such a way that the overflowing pyrolysis oil covers the entire partition (112) between the annular channel (110) and the heat exchange channel (126) with a layer (114) of pyrolysis oil on the inside (Fig. 3).

3. Plant according to Claim 1 or 2, characterized in that the heat exchange channel (26 or 126) is connected at the bottom to a separator vessel (28) for high-boiling pyrolysis oil, the oil space (30) of which vessel is connected to the overflow channel (82) or annular channel (110), with insertion of a pump (90 or 190).

4. Plant according to at least one of Claims 1 to 3, having a further cooling stage (36), where low-boiling pyrolysis oil is obtained, downstream of the cooling stage (22 or 122), characterized in that the spray nozzles (68 or 168) can be supplied with the low-boiling pyrolysis oil being obtained in the further cooling stage (36).

5. Plant according to at least one of Claims 1 to 4, characterized in that the heat exchange channel (26 or 126) is closed by a hemispherical cover (54 or 154) and the upper end region (56 or 156) is hemispherical.

6. Plant according to at least one of Claims 1, 3, 4 or 5, characterized in that the spray nozzles (68) are arranged on a toroid distributor pipe (62), the central axis (64) of which points in the same direction as the vertical axis (66) of the heat exchange channel (26).

7. Plant according to at least one of Claims 1 or 3 to 6, characterized in that the overflow channel (82) is located in the region where the cover (54) is joined (Fig. 2).

8. Plant according to at least one of Claims 1 or 3 to 7, characterized in that the spray nozzles (68) have a spray angle (72) which is about 45 to 60° and that the spray nozzles (68) are aligned downwards in such a way that the circumferential line (74), close to the wall, of of their cones – as viewed in a vertical central section – each run approximately parallel to and at a distance from the vertical wall of the heat exchange channel (26) (Fig. 2)

9. Plant according to at least one of Claims 1 or 3 to 8, characterized in that the overflow channel (82) encompasses the wall (84) of the heat exchange channel (26) and that a multiplicity of passage orifices (86) to the inner surface of the wall of the heat exchange channel (26) are provided.

10. Plant according to one of Claims 1 or 3 to 9, characterized in that the blanketing gas consists essentially of pyrolysis gas which has been freed of oil and purified.

11. Plant according to at least one of Claims 2 to 5, characterized in that the lower end of the annular channel (110) is, advantageously with insertion of a pump (190), connected to the oil space (30) of the separator vessel (28) of the cooling stage (122).

12. Plant according to at least one Claims 2 to 5 or 11, characterized in that the annular channel (110) has a height which is approximately equal to once to twice the clear width of the heat exchange channel (126).

13. Plant according to at least one of Claims 2 to 5 or 11 to 12, characterized in that the partition (112) between the heat exchange channel (126) and the annular channel (110) sawtooth-like vertical projections (123) at the upper end (Figure 4).

## Revendications

1. Installation pour la pyrolyse de matières de déchet contenant des hydrocarbures, en particulier de matières de déchet contenant des déchets de matières synthétiques et/ou de caoutchouc, comportant un réacteur de pyrolyse (10) et au moins un étage de refroidissement (22, 36) pour le gaz de pyrolyse chaud produit dans le réacteur de pyrolyse, au moins l'étage de refroidissement (22) monté directement en aval du réacteur de pyrolyse (10) présentant un refroidisseur équipé d'un canal d'échange de chaleur (26) s'étendant de haut en bas pour un échange de chaleur direct entre le gaz de pyrolyse et de l'huile de pyrolyse qui est produite par condensation de gaz de pyrolyse, caractérisée en ce que dans la zone d'extrémité supérieure (56) du canal d'échange de chaleur (26) sont agencés en cercle pour l'huile de pyrolyse plusieurs ajutages de pulvérisation (68) dont la direction de pulvérisation est sensiblement orientée vers l'extrémité inférieure du canal d'échange de chaleur (26), en ce qu'au-dessus des ajutages de pulvérisation (68) débouche une conduite de gaz chauds (20) pour l'amenée du gaz de pyrolyse chaud dans le canal d'échange de chaleur (26), en ce qu'au-dessus des ajutages de pulvérisation (68) débouche dans la zone d'extrémité supérieure (56) au moins une conduite d'alimentation (78) pour un gaz de protection, et en ce qu'en dessous des ajutages de pulvérisation (68) est agencé au moins un canal de décharge (82) pour de l'huile de pyrolyse par lequel une couche (83) d'huile de pyrolyse peut être amenée à l'intérieur sur la paroi (84) du canal d'échange de chaleur (26) (figures 1 et 2).

2. Installation pour la pyrolyse de matières de déchet contenant des hydrocarbures, en particulier des matières de déchet contenant des déchets de matières synthétiques et/ou de caoutchouc, comportant un réacteur de pyrolyse (10) et au moins un étage de refroidissement (122, 36) pour le gaz de pyrolyse chaud produit dans le réacteur de pyrolyse, au moins l'étage de refroidissement monté directement en aval du réacteur de pyrolyse (10) présentant un canal d'échange de chaleur (126) s'étendant de haut en bas pour un échange de chaleur direct entre le gaz de pyrolyse chaud et de l'huile de pyrolyse qui est produite par condensation de gaz de pyrolyse, caractérisée en ce que dans la zone d'extrémité supérieure (156) du canal d'échange de chaleur (126) est agencé au moins un ajutage de pulvérisation (168), pour l'huile de pyrolyse, ayant un sens de pulvérisation dirigé vers le bas, le cône de pulvérisation (108) s'étendant sur la totalité de la section transversale du canal d'échange de chaleur (126), en ce qu'en dessous de l'ajutage de pulvérisation (168), dans le canal d'échange de chaleur (126), débouche dans la paroi latérale du canal d'échange de chaleur (126) une conduite de gaz chaud (120) pour le gaz de pyrolyse chaud qui a un sens d'écoulement transversal à l'axe vertical (166) du canal d'échange de chaleur, en ce qu'au-dessus de l'ajutage de pulvérisation (168) est agencé un pulvérisateur rotatif (98) qui présente un disque de pulvérisation agencé transversalement par rapport à l'axe vertical (166) et qui est prévu pour la pulvérisation d'huile de pyrolyse, en ce que le canal d'échange de chaleur (126) est entouré dans la zone (152), en dessous de l'ajutage de pulvérisation (168), d'un canal annulaire (110) auquel peut être amenée par son extrémité inférieure de l'huile de pyrolyse et qui est ouvert à son extrémité supérieure et forme un déversoir pour l'huile de pyrolyse de façon que l'huile de pyrolyse débordante couvre d'une couche (114) d'huile de pyrolyse la totalité de la paroi de séparation (112) entre le canal annulaire (110) et le canal d'échange de chaleur (126), sur la face interne (figure 3).

3. Installation suivant l'une ou l'autre des revendications 1 et 2, caractérisée en ce que le canal d'échange de chaleur (26 ou 126) est relié par le bas, pour de l'huile de pyrolyse à haut point d'ébullition, à un récipient de séparation (28) dont l'espace à huile (30) est relié au canal de décharge (82) ou au canal annulaire (110) par l'interposition d'une pompe (90 ou 190).

4. Installation suivant au moins l'une quelconque des revendications 1 à 3, comportant un autre étage de refroidissement (36) qui est monté en aval de l'étage de refroidissement (22 ou 122) et dans lequel se dépose de l'huile de pyrolyse à bas point d'ébullition, caractérisée en ce que les ajutages de pulvérisation (68 ou 168) peuvent être alimentés par l'huile de pyrolyse à bas point d'ébullition qui se dépose dans l'autre étage de refroidissement (36).

5. Installation suivant au moins l'une quelconque des revendications 1 à 4, caractérisée en ce que le canal d'échange de chaleur (26 ou 126) est fermé par une calotte en forme de demi-sphère (54 ou 154) et en ce que la zone d'extrémité supérieure (56 ou 156) a la forme d'une demi sphère.

6. Installation suivant au moins l'une des revendications 1, 3, 4 et 5, caractérisée en ce que les ajutages de pulvérisation (68) sont agencés sur un tube de répartition torique (62) dont l'axe central (64) pointe dans la même direction que l'axe vertical (66) du canal d'échange de chaleur (26).

7. Installation suivant au moins l'une quelconque des revendications 1, et 3 à 6, caractérisée en ce que le canal de décharge (82) est agencé dans la zone de raccordement de la calotte (54) (figure 2).

8. Installation suivant au moins l'une quelconque des revendications 1, et 3 à 7, caractérisée en ce que les ajutages de pulvérisation (68) présentent un angle de pulvérisation (72) compris approximativement entre 45° et 60°, et en ce que les ajutages de pulvérisation (68) sont orientés vers le bas de façon que leurs cônes de pulvérisation, vus en coupe centrale verticale, s'étendent respectivement, par les génératrices proches de la paroi, approximativement parallèlement à la paroi verticale du canal d'échange de chaleur (26) et à distance de·celle-ci (figure 2).

9. Installation suivant au moins l'une quelconque des revendications 1, et 3 à 8, caractérisée en ce que le canal de décharge (82) entoure la paroi (84) du canal d'échange de chaleur (26) et en ce qu'un grand nombre d'orifices de passage (86) est prévu vers la surface interne de la paroi du canal d'échange de chaleur (26).

10. Installation suivant au moins l'une quelconque des revendications 1, et 3 à 9, caractérisée en ce que le gaz de protection est constitué essentiellement par du gaz de pyrolyse qui est libéré et épuré de l'huile.

11. Installation suivant au moins l'une quelconque des revendications 2 à 5, caractérisée en ce que l'extrémité inférieure du canal annulaire (110) et raccordée de façon appropriée, par l'interposition d'une pompe (190), à l'espace à huile (30) du récipient de séparation (28) de l'étage de refroidissement (122).

12. Installation suivant au moins l'une quelconque des revendications 2 à 5, et 11, caractérisée en ce que le canal annulaire (110) présente une hauteur qui est approximativement égale à une à deux fois la largeur interne du canal d'échange de chaleur (126).

13. Installation suivant au moins l'une quelconque des revendications 2 à 5, et 11, et 12, caractérisée en ce que la paroi de séparation (112) entre le canal d'échange de chaleur (126) et le canal annulaire (110) présente à l'extrémité supérieure des saillies verticales (123) en forme de dents de scie (figure 4).

EP 0 297 420 B1

Fig.1

Fig.2

Fig.3

Fig.4

12